# EUROPEAN PATENT SPECIFICATION

(11) **EP 1 584 976 B1**
(45) Date of publication and mention of the grant of the patent: **02.05.2007**
(21) Application number: 05101752.3
(22) Date of filing: 07.03.2005
(51) Int. Cl.: G03B 15/05, H04N 5/225

(54) **Camera with pop-up flash unit**
Kamera mit herausspringendem Blitzgerät
Appareil de prise de vues avec unité de flash rétractable

(30) Priority: 10.03.2004 KR 2004016049
(43) Date of publication of application: 12.10.2005
(73) Proprietor: SAMSUNG ELECTRONICS CO., LTD., Suwon-si, Gyeonggi-Do 442-742 (KR)
(72) Inventor: Lee, Dong-seok, Seoul (KR)
(74) Representative: Geary, Stuart Lloyd

(56) References cited:
- US-A1- 2002 122 666
- PATENT ABSTRACTS OF JAPAN vol. 2003, no. 08, 6 August 2003 (2003-08-06) -& JP 2003 101834 A (SONY CORP), 4 April 2003 (2003-04-04)
- PATENT ABSTRACTS OF JAPAN vol. 2002, no. 09, 4 September 2002 (2002-09-04) -& JP 2002 148690 A (CANON INC), 22 May 2002 (2002-05-22)

## Description

The present invention relates to a camera apparatus having a body and a pop-up flash including a pivotably mounted flash carrier and a catch for holding the flash in the retracted position, wherein the catch includes a locking lever pivotally mounted on the body, a hook on the locking lever, a solenoid mounted on the body in engagement with the locking lever to control rotation of the locking lever and a resilient member mounted on the flash carrier to be engaged by the hook when in the retracted position, the hook releasing the resilient member in response to rotation of the locking lever to allow the flash to pop-up, wherein the resilient member is sufficiently resilient to permit re-engagement of the resilient member by the hook, without rotation of the locking lever, when the flash is moved into the retracted position. Such a camera apparatus is known from US 2002/122666A and JP 2003/101834A.

In general, a photographing apparatus, such as camcorder, digital still camera, or a more traditional film type camera takes a photograph of a subject so as to produce still or moving images of that subject. The photographing apparatus typically includes a flash device emits light towards the subject. The flash device emits a quantity of light which depends upon the brightness of the area surrounding the subject. The flash device may be an external flash mounted on an upper portion of the photographing apparatus, a built-in flash or a pop-up flash which is movable between a retracted position and a raised position. In order to improve portability, the tendency is moving towards using the pop-up flash. The pop-up flash is connected to the photographing apparatus by a linkage mechanism which moves the pop-up flash between the retracted and raised positions.

The pop-up flash may take the form of various shapes. In order to minimize the size of the camera, a linkage mechanism was developed to pivot the flash body into a space.

However, a drawback of known pop-up flashes is that a pair of locking members must be linked to lock the flash body in the retracted on non-retracted position.

Additionally, an elastic spring is used to restore the position of the locking members. As such, there is a problem in that its construction is relatively complicated.

Accordingly, there is a need for an improved pop-up flash that emits a light towards an object whilst reducing the number of parts and simplifying operation.

An object of the present invention is to solve at least the above problems and/or disadvantages and to provide at least the advantages described below. Accordingly, an aspect of the present invention is to provide an improved pop-up flash for a photographing apparatus capable of reducing the number of processes and components.

A camera apparatus according to the present invention is characterised in that the catch is configured so that the locking lever rotates when the solenoid is de-energised such that the hook releases the resilient member and allows the flash to pop-up, the flash being held in the retracted position by the catch when the solenoid is energised.

An embodiment of the present invention will now be described, by way of example only, and with reference to the accompanying drawings, in which:
Figure 1 is a perspective view of a photographing apparatus including a pop-up flash according to an embodiment of the present invention;
Figure 2 is a perspective view of a pop-up flash in accordance with another embodiment of the present invention;
Figure 3 is an exploded perspective view of the pop-up flash in Figure 2;
Figure 4 is a side view of the locking boss in Figure 2; and
Figure 5 is a top view depicting an operation of the pop-up flash in Figure 2.

Throughout the drawings, the same drawing reference numerals will be understood to refer to the same elements, features, and structures. Also, descriptions of well-known functions and constructions are omitted for clarity and conciseness.

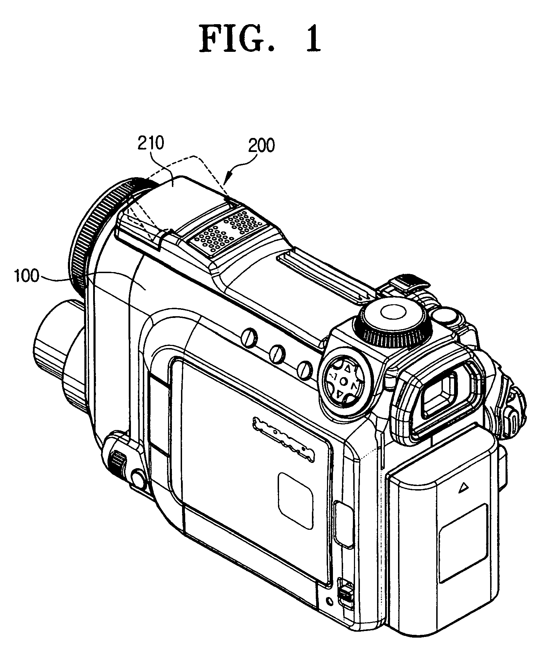

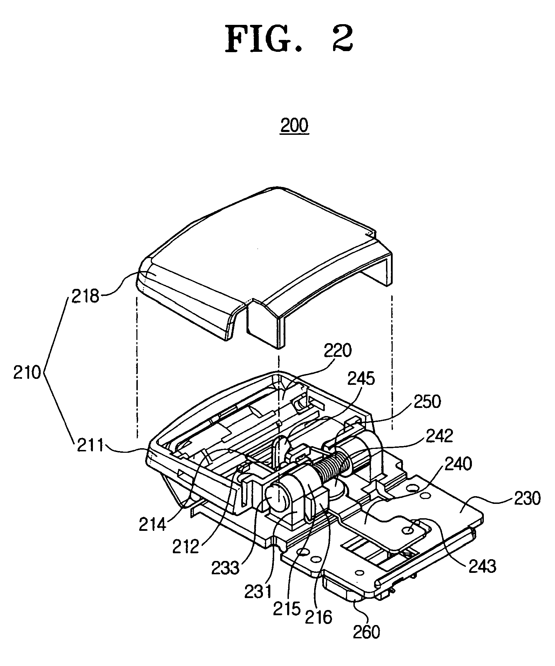

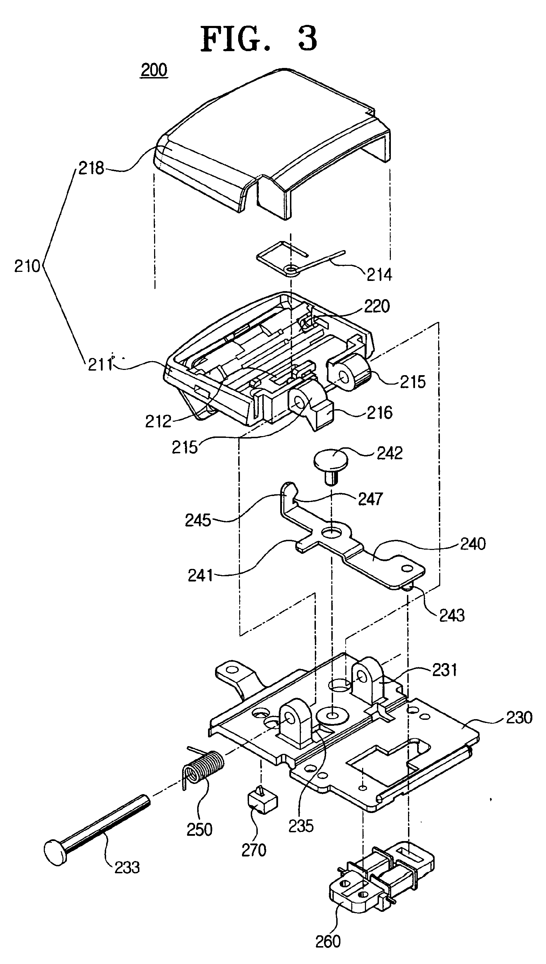

Referring to Figures 1 to 3, the pop-up flash 200 includes a flash body 210, a pop-up frame 230, a locking lever 240, a locking member 260 and a resilient member 250.

The flash body 210 includes a light emitting portion 220 to generate light, and a front cover 211 which encloses the lens of the light emitting portion 220. Additionally, a rear cover 218 encloses a rear portion of the light emitting portion 220. The flash body 210 is engaged to the pop-up frame 230 by a hinge so that the flash body 210 is engaged to a body 100 of the photographing apparatus in a pivotal manner. In this embodiment, a pair of hinge bosses 215 protrude from one side of the front cover 211 so as to allow the front cover 211 to be engaged to the pop-up frame 230. Preferably, a return boss 216 is formed on at least one of the hinge bosses 215 to protrude therefrom. The front cover 211 of the flash body 210 is formed with a through-hole 212 having a specified length. The through-hole 212 accommodates a locking pin 214 which is hooked to a locking boss 245. The locking pin 214 is made of a resilient material, and moves between a position P3 (see Figure 5) where the locking pin 214 engages with the locking boss 245 and a position P4 (see Figure 5) where the locking pin 214 is disengaged from the locking boss 245.

The pop-up frame 230 is fixed to the body 100 of the photographing apparatus, and includes a pair of hinge supports 231 protruding from an upper portion of the pop-up frame 230. The hinge supports 231 engage with the hinge bosses 215 via a hinge shaft 233. This allows the hinge supports 231 to pivot with respect to the hinge bosses 215. In this embodiment, the pop-up frame 230 is preferably moulded by metal die casting such as with aluminium alloy. Accordingly, the hinge supports 231 may be formed at any position of the upper portion of the pop-up frame 230. Known pop-up frames are formed by sheet metal. The known design is limited because the hinge boss is only formed on a rim of the pop-up frame. However, the pop-up frame of this embodiment overcomes this design limitation. The pop-up frame of this embodiment provides strength and rigidity to the pop-up frame and prevents weakening thereof.

The pop-up frame 230 has a groove 235 allowing the return boss 216 of the body 210 to retract during the pop-up operation of the flash. The groove 235 is easily formed on the pop-up frame 230 as it is also made by die casting. Accordingly, the resilient member 250 is installed on the hinge shaft 233 to resiliently urge the flash body 210 to the raised position.

The locking lever 240 includes the locking boss 245. The locking boss 245 protrudes from one side of the locking lever 240. The locking boss 245 is located opposite the front cover 211 of the flash body 210 when the pop-up flash is in the retracted position. The locking lever 240 pivotally engages with the upper surface of the pop-up frame 230 using a hinge pin 242. The locking lever 240 pivotally moves between a first position P1 (see Figure 5), where the locking boss 245 engages with the locking pin 214, and a second position P2 (see Figure 5) where the locking boss 245 is released from the locking pin 214.

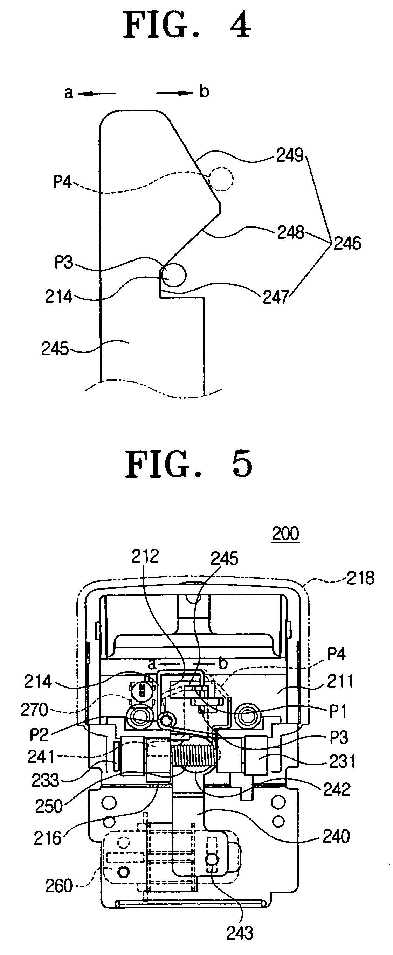

As shown in Figure 4, the locking boss 245 is provided with a contact surface 246. The locking pin 214 contacts with the contact surface 246 of the locking boss 245 when the flash body 210 is pivoted between the retracted and raised positions. The contact surface 246 has an engaging groove 247 which receives the locking pin 214 when the flash body 210 is in the retracted position. A second inclined surface 249 connects the upper end of the locking boss 245 to an upper end of the engaging groove 247. The engaging groove 247 has a first inclined surface 248 on an upper surface of the engaging groove 247. The angle of inclination of the first inclined surface 248 and the resilient force of the locking pin 214 are set so that even though the locking pin 214 is moved by the resilient force of the resilient member 250, the locking boss 245 is not released from the locking pin 214.

The locking member 260 selectively secures the locking lever 240 in a predetermined position. The locking member 260 is operated automatically so as to restrain the pivotal movement of the locking lever 240. This operation is by an electrical signal generated by user operation of the camera. A solenoid 260 is preferably utilized as the automatic locking member. The solenoid 260 is coupled to a coupling pin 243 which protrudes from a lower surface of the locking lever 240.

The locking lever 240 selectively restrains movement of the coupling pin 243. A sensor 270 determines whether the flash body 210 is in the retracted position, and the solenoid 260 is controlled by a signal from the sensor 270.

Operation of the pop-up flash will now be described with reference to the accompanying drawings.

Referring to Figure 5, a coupling state of the locking boss 245 and the locking pin 214 after the flash body 210 is positioned at the retracted position is shown. The solenoid 260 is energized which locks the coupling pin 243. Thus, the locking lever 240 is locked in first position P1.

If the solenoid 260 is de-energized, the locking lever 240 freely pivots. This means the locking pin 214 is moved under the influence of the resilient force of the resilient member 250, thus, the flash body 210 is raised. As such, the locking boss 245 moves in the direction of arrow a. The coupling pin 243 moves up along the first inclined surface 248 (see Figure 4). Thus, the locking boss 245 is released by the locking pin 214.

After the locking boss 245 is released to move from the locking pin 214, the flash body 210 extends to the raised position because of the resilient force of the resilient member 250. At that time, the return boss 216 contacts with a return piece 241 of the locking lever 240. Thus, the locking lever 240 pivots to its original position, P1. With this construction, the locking lever 240 is simplified since an additional resilient member to return the locking lever 240 is not necessary.

When the flash body 210 is moved from the raised position to the retracted position, the sensor 270 detects movement of the flash body 210 toward the retracted position. As such, the solenoid 260 is energized, and the locking lever 240 is locked. As the flash body 210 is lowered, the locking boss 245 contacts the locking pin 214 through the through-hole 212. The locking pin 214 moves downwardly along the second inclined surface 249 (see Figure 4) of the contact surface 246 and is resiliently moved to a fourth position P4 in the direction of arrow b. As the flash body 210 is lowered further, the locking pin 214 is located opposite the engaging groove 247. The locking pin 214 is located in the engaging groove 247 by the resilient force of the locking pin 214. Thus, the flash body returns to a third position P3 in which the locking boss 245 is engaged with the locking pin 214. As such, the flash body 210 is fixed to the body 100 of the photographing apparatus, and the pop-up flash is retracted in the body of the photographing apparatus. Consequently, the retracting operation of the flash body 210 is complete.

In this embodiment, although the locking lever and the solenoid are installed in the body of the photographing apparatus, and the locking pin is installed in the flash body, the embodiment of the present invention is not limited thereto. Additional suitable arrangements and constructions may be used. The positions of the locking pin and the locking boss may be altered with respect to each other. Consequently, when the flash body moves to the raised position, the locking lever is pivoted by the resilient force of the resilient member 250. Thus, the locking boss is released from the locking pin. When the flash body is moved to the retracted position, the locking boss engages with the locking pin because of the resilient movement of the locking pin.

Also, although the locking pin, which is preferably made of a resilient material, is utilized as a member engaging with the locking boss, any member floatable by the contact of the locking boss may be utilized.

Accordingly, the pop-up operation of the flash body is restrained by the locking lever only, and an additional resilient member is not necessary to return the locking lever to its original position. Therefore, the construction of the photographing apparatus is simplified in relation to a known pop-up flash, thereby reducing manufacturing costs.

## Claims

1. A camera apparatus (100) having a body and a pop-up flash (200) including a pivotably mounted flash carrier (210) and a catch (214, 245) for holding the flash (200) in the retracted position, wherein the catch (214, 245) includes a locking lever (240) pivotally mounted on the body, a hook (245) on the locking lever (240), a solenoid (260) mounted on the body in engagement with the locking lever (240) to control rotation of the locking lever (240) and a resilient member (214) mounted on the flash carrier (210) to be engaged by the hook (245) when in the retracted position, the hook (245) releasing the resilient member (214) in response to rotation of the locking lever (240) to allow the flash (200) to pop-up, wherein the resilient member (214) is sufficiently resilient to permit re-engagement of the resilient member (214) by the hook (245), without rotation of the locking lever (240), when the flash (200) is moved into the retracted position, **characterised in that** the catch (214,245) is configured so that the locking lever (240) rotates when the solenoid (260) is de-energised such that the hook (245) releases the resilient member (214) and allows the flash (200) to pop-up, the flash (200) being held in the retracted position by the catch when the solenoid (260) is energised.

2. A camera apparatus (100) according to claim 1, further comprising a resilient member (250) to move the flash carrier (210) to the raised position.

3. A camera apparatus (100) according to claim 1 or claim 2, wherein the hook (245) has an engaging groove (247) which engages with the resilient member (214) when the flash carrier (210) is in the retracted position and the hook (245) has a first inclined surface (248) to rotate the locking lever (240) by contacting with the resilient member (214) when the flash carrier (210) is allowed to pop-up.

4. The camera apparatus (100) according to claim 3, wherein the hook (245) has a second inclined surface (249) to guide the resilient member (214) when the flash carrier (210) is moved to the retracted position, such that a resilient force of the resilient member (214) is substantially increased before the resilient member (214) is inserted into the engaging groove (247).

5. The camera apparatus (100) according to any preceding claim, wherein the locking lever (240) further comprises a return portion (241) that protrudes from a side of the locking lever (240) and the return portion (241) moves the locking lever (240) to allow the resilient member (214) to be engaged by the hook (245) when moved to the retracted position by contacting with the flash carrier (210) to be popped up in a state where the hook (245) is released from the flash carrier (210).

6. The camera apparatus (100) according to any preceding claim further comprising a sensor (270) mounted to the body operable to detect whether the flash carrier (210) is positioned in the retracted position and the solenoid (260) selectively locks the locking lever (240) according to a signal of the sensor (270).

7. The camera apparatus (100) according to any preceding claim further comprising a pop-up frame (230) installed in the body of the camera apparatus (100) to pivotally support the flash carrier (210) and the locking lever (240) and the pop-up frame (230) is shaped by moulding.

## Patentansprüche

1. Kamera (100) mit einem Körper und einem Aufklappblitz (200) umfassend einen verschwenkbar angebrachten Blitzträger (210) und eine Arretiereinrichtung (214, 245) zum Halten des Blitzes (200) in der eingeklappten Position, wobei die Arretiereinrichtung (214, 245) einen Verriegelungshebel (240), der verschwenkbar am Körper angebracht ist, einen Haken (245) an dem Verriegelungshebel (240), einen Magneten (260), der am Körper und in Eingriff mit dem Verriegelungshebel (240) angebracht ist, um die Drehung des Verriegelungshebels (240) zu steuern und ein elastisches Element (214), das an dem Blitzträger (210) angebracht ist, um in der eingeklappten Position mit dem Haken (245) in Eingriff zu kommen, umfasst, wobei der Haken (245) das elastische Element (214) auf die Drehung des Verriegelungshebels (240) freigibt, um es zu gestatten, dass der Blitz (200) aufklappt, wobei das elastische Element (214) ausreichend elastisch ist, um das wieder in Eingriff bringen des elastischen Elements (214) mit dem Haken (245) ohne Drehung des Verriegelungshebels (240) zu gestatten, wenn der Blitz (200) in die eingeklappte Position bewegt wird, **dadurch gekennzeichnet, dass** die Arretiereinrichtung (214, 245) derart ausgestaltet ist, dass sich der Verriegelungshebel (240) dreht, wenn der Magnet (260) ausgeschaltet ist, so dass der Haken (245) das elastische Element (214) freigibt und es dem Blitz (200) gestattet aufzuklappen, wobei der Blitz (200) durch die Arretiereinrichtung in der eingeklappten Position gehalten wird, wenn der Magnet (260) eingeschaltet ist.

2. Kamera (100) nach Anspruch 1, ferner umfassend ein elastisches Element (250) um den Blitzträger (210) in die ausgeklappte Position zu bewegen.

3. Kamera (100) nach Anspruch 1 oder 2, wobei der Haken (245) eine Eingriffsnut (247) aufweist, die mit dem elastischen Element (214) in Eingriff kommt, wenn sich der Blitzträger (210) in der eingeklappten Position befindet und der Haken (245) eine erste geneigte Fläche (248) aufweist, um den Verriegelungshebel (240) durch Kontaktieren mit dem elastischen Element (214) zu drehen, wenn es dem Blitzträger (210) gestattet ist aufzuklappen.

4. Kamera (100) nach Anspruch 3, bei der der Haken (245) eine zweite geneigte Fläche (249) aufweist, um das elastische Element (214) zu führen, wenn der Blitzträger (210) in die eingeklappte Position bewegt wird, so dass eine Federkraft des elastischen Elements (214) im Wesentlichen erhöht wird bevor das elastische Element (214) in die Eingriffsnut (247) eingeführt wird.

5. Kamera (100) nach einem der vorstehenden Ansprüche, bei der der Verriegelungshebel (240) ferner einen Rückführabschnitt (241) umfasst, der von einer Seite des Verriegelungshebels (240) vorragt und wobei der Rückführabschnitt (241) den Verriegelungshebel (240) bewegt, um es dem elastischen Element (214) zu gestatten bei der Bewegung in die eingeklappte Position durch Kontaktieren mit dem Blitzträger (210), der aufklappen soll, in einem Zustand, in dem der Haken (245) vom Blitzträger (210) freigegeben ist, mit dem Haken (245) in Eingriff zu kommen.

6. Kamera (100) nach einem der vorstehenden Ansprüche, ferner umfassend einen Sensor (270), der an dem Körper angebracht ist und betreibbar ist, um zu erfassen, ob sich der Blitzträger (210) in der eingeklappten Position befindet und wobei der Magnet (260) gemäß einem Signal von dem Sensor (270) den Verriegelungshebel (240) wahlweise verriegelt.

7. Kamera (100) nach einem der vorstehenden Ansprüche, ferner umfassend einen Aufklapprahmen (230), der im Körper der Kamera (100) vorgesehen ist, um den Blitzträger (210) verschwenkbar zu halten, wobei der Verriegelungshebel (240) und der Aufklapprahmen (230) durch Gießen ausgebildet sind

## Revendications

1. Appareil photographique (100) ayant un corps et un flash de type pop-up (200), qui comprend un porte-flash (210) et un loquet (214, 245) pour maintenir le flash (200) en sa position rétractée, appareil dans lequel le loquet (240, 245) comprend un levier de blocage (240) monté de façon pivotante sur le corps, un crochet (245) prévu sur le levier de blocage (240), un solénoïde (260) monté sur le corps et qui s'engage avec le levier de blocage (240) pour contrôler la rotation du levier de blocage (240) et un élément élastique (214) monté sur le porte-flash (210) pour être accroché par le crochet (245) lorsque en position rétractée, le crochet (245) relâchant l'élément élastique (214) en réponse à la rotation du levier de blocage (240) pour laisser surgir le flash (200), l'élément élastique (214) étant suffisamment résilient pour permettre au crochet (245) de rattraper l'élément élastique (214) sans rotation du levier de blocage (240) quand le flash (200) retourne à sa position rétractée, **caractérisé en ce que** le loquet (214, 245) est configuré de façon à ce que le levier de blocage (240) tourne lorsque le solénoïde (260) est désexcité, de sorte que le crochet (245) relâche l'élément élastique (214) et laisse surgir le flash (200), le flash (200) étant maintenu en position rétractée par le loquet lorsque le solénoïde (260) est excité.

2. Appareil photographique (100) selon la revendication 1, qui comprend de plus un élément élastique (250) pour amener le porte-flash (210) jusqu'à la position relevée.

3. Appareil photographique (100) selon la revendication 1 ou la revendication 2, dans lequel le crochet (245) est pourvu d'une rainure d'engagement (247) qui s'engage avec l'élément élastique (214) lorsque le porte-flash (210) est en position rétractée, et le crochet (245) présente une première surface inclinée (248) pour faire tourner le levier de blocage (240) par mise en contact avec l'élément élastique (214) lorsque le porte-flash (210) est libre de surgir.

4. Appareil photographique (100) selon la revendication 3, dans lequel le crochet (245) présente une seconde surface inclinée (249) pour guider l'élément élastique (214) lorsque le porte-flash (210) revient jusqu'à sa position rétractée, de sorte qu'une force de résilience de l'élément élastique (214) augmente sensiblement avant l'introduction de l'élément élastique (214) dans la rainure d'engagement (247).

5. Appareil photographique (100) selon l'une quelconque des revendications précédentes, dans lequel le levier de blocage (240) comprend de plus une partie de retour (241) qui fait saillie sur un côté du levier de blocage (240), et la partie de retour (241) déplaçant le levier de blocage (240) afin que l'élément élastique (214) puisse être accroché par le crochet (245) lors de son retour à la position rétractée par contact avec le porte-flash (210) pour revenir à un état dans lequel le crochet (245) est dégagé du porte-flash (210).

6. Appareil photographique (100) selon l'une quelconque des revendications précédentes, qui comprend de plus un capteur (270) monté sur le corps et qui peut fonctionner pour détecter si le porte-flash (210) se trouve ou non en sa position rétractée, et le solénoïde (260) bloque sélectivement le levier de blocage (240) en fonction d'un signal émis par le capteur (270).

7. Appareil photographique (100) selon l'une quelconque des revendications précédentes, qui comprend de plus un cadre pop-up (230) installé dans le corps de l'appareil photographique (100) pour supporter de façon pivotante le porte-flash (210) et le levier de blocage (240), le cadre pop-up étant formé par moulage.
